# EUROPEAN PATENT APPLICATION

(11) **EP 4 180 644 A1**
(43) Date of publication of application: **17.05.2023**
(21) Application number: 22199674.7
(22) Date of filing: 04.10.2022
(51) Int. Cl.: F02C 6/20, B64D 27/00, F02C 9/00

(54) **OPEN ROTOR GAS TURBINE ENGINE NOISE REDUCTION**

(30) Priority: 15.11.2021 US 202117526383
(71) Applicant: General Electric Company, Schenectady, NY 12345 (US)
(72) Inventor: RAMAKRISHNAN, Kishore, Niskayuna, 12309 (US); WOOD, Trevor Howard, Niskayuna, 12309 (US); CAFARO, Stefan Joseph, Niskayuna, 12309 (US); McQUISTON, Robert Jon, Evendale, 45241 (US); OSTDIEK, David Marion, Evendale, 45241 (US); DePUY, Timothy Richard, Evendale, 45241 (US); GOERIG, Trevor, Evendale, 45241 (US); WESTERVELT, Eric Richard, Niskayuna, 12309 (US)
(74) Representative: Openshaw & Co.

(57) **Abstract**

Systems and methods for controlling an unducted turbofan engine (100, 102) to limit noise. The unducted turbofan engine (100, 102) may include an unducted fan (152) drivingly coupled with a low-pressure turbine (134) and a plurality of unducted outlet guide vanes (162). The unducted fan (152) may include a plurality of fan blades (154) and a pitch angle of the fan blades (154) may be variable. A pitch angle of the unducted outlet guide vanes (162) may be variable. A controller (300, 302) is configured to control the engine (100, 102) to limit noise based on a noise sensitive condition (350).

## Description

### FIELD

The present disclosure relates to a gas turbine engine.

### BACKGROUND

Aviation authorities and governments seek to limit how much noise an aircraft may produce, for example, through regulations. Such regulations may set an allowable level of community noise and cabin noise.

Community noise may include noise produced near ground level during takeoff and landing operations. An allowable level of community noise may depend on a location and a time of day.

Cabin noise may include the noise inside the cabin. Acceptable cabin noise levels may be set with respect to the comfort of those onboard, for example, during cruise operations.

Engines are a major contributor to the noise emitted by an aircraft. Improvements to reduce the noise emitted from engines and thereby reduce the overall noise of the aircraft would be welcomed in the art.

### BRIEF DESCRIPTION OF THE DRAWINGS

A full and enabling disclosure of the present disclosure, including the best mode thereof, directed to one of ordinary skill in the art, is set forth in the specification, which refers to the appended figures, in which:
Fig. 1 is a cross-sectional view of a gas turbine engine in accordance with an exemplary aspect of the present disclosure.
Fig. 2 is a schematic view of an aircraft including the engine of Fig. 1 and a control system, in accordance with an exemplary aspect of the present disclosure.
Fig. 3 is an exemplary noise control method, in accordance with an exemplary aspect of the present disclosure.
Fig. 4 is an exemplary noise profile in accordance with an exemplary aspect of the present disclosure.
Fig. 5 is a graphical illustration of change in pitch angle of outlet guide vanes and fan noise in accordance with an exemplary aspect of the present disclosure.
Fig. 6 is a graphical illustration of fan speed and fan system noise associated with an approach operation, in accordance with an exemplary aspect of the present disclosure.
Fig. 7 is a graphical illustration of fan speed and fan system noise associated with a sideline operation, in accordance with an exemplary aspect of the present disclosure.
Fig. 8 is a schematic view of an aircraft including the engine of Fig. 1 and a control system, in accordance with an exemplary aspect of the present disclosure.
Fig. 9 is an exemplary noise control method, in accordance with an exemplary aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

For purposes of the description hereinafter, the terms "upper", "lower", "right", "left", "vertical", "horizontal", "top", "bottom", "lateral", "longitudinal", and derivatives thereof shall relate to the disclosure as it is oriented in the drawing figures. However, it is to be understood that the embodiments of the disclosure may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered as limiting.

As used herein, the terms "first", "second", and "third" may be used interchangeably to distinguish one component from another and are not intended to signify location or importance of the individual components.

The terms "forward" and "aft" refer to relative positions within a gas turbine engine or vehicle and refer to the normal operational attitude of the gas turbine engine or vehicle. For example, regarding a gas turbine engine, forward refers to a position closer to an engine inlet and aft refers to a position closer to an engine nozzle or exhaust.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

A "third stream" as used herein means a non-primary air stream capable of increasing fluid energy to produce a minority of total propulsion system thrust. A pressure ratio of the third stream may be higher than that of the primary propulsion stream (e.g., a bypass or propeller driven propulsion stream). The thrust may be produced through a dedicated nozzle or through mixing of an airflow through the third stream with a primary propulsion stream or a core air stream, e.g., into a common nozzle.

In certain exemplary embodiments an operating temperature of the airflow through the third stream may be less than a maximum compressor discharge temperature for the engine, and more specifically may be less than 350 degrees Fahrenheit (such as less than 300 degrees Fahrenheit, such as less than 250 degrees Fahrenheit, such as less than 200 degrees Fahrenheit, and at least as great as an ambient temperature). In certain exemplary embodiments these operating temperatures may facilitate heat transfer to or from the airflow through the third stream and a separate fluid stream. Further, in certain exemplary embodiments, the airflow through the third stream may contribute less than 50% of the total engine thrust (and at least, e.g., 2% of the total engine thrust) at a takeoff condition, or more particularly while operating at a rated takeoff power at sea level, static flight speed, 86 degree Fahrenheit ambient temperature operating conditions.

Furthermore in certain exemplary embodiments, aspects of the airflow through the third stream (e.g., airstream, mixing, or exhaust properties), and thereby the aforementioned exemplary percent contribution to total thrust, may passively adjust during engine operation or be modified purposefully through use of engine control features (such as fuel flow, electric machine power, variable stators, variable inlet guide vanes, valves, variable exhaust geometry, or fluidic features) to adjust or optimize overall system performance across a broad range of potential operating conditions.

The term "turbomachine" or "turbomachinery" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc.

The term "combustion section" refers to any heat addition system for a turbomachine. For example, the term combustion section may refer to a section including one or more of a deflagrative combustion assembly, a rotating detonation combustion assembly, a pulse detonation combustion assembly, or other appropriate heat addition assembly. In certain example embodiments, the combustion section may include an annular combustor, a can combustor, a cannular combustor, a trapped vortex combustor (TVC), or other appropriate combustion system, or combinations thereof.

The terms "low" and "high", or their respective comparative degrees (e.g., -er, where applicable), when used with a compressor, a turbine, a shaft, or spool components, etc. each refer to relative speeds within an engine unless otherwise specified. For example, a "low turbine" or "low speed turbine" defines a component configured to operate at a rotational speed, such as a maximum allowable rotational speed, lower than a "high turbine" or "high speed turbine" at the engine.

The present disclosure is generally related to systems and methods for controlling an unducted turbofan engine to limit noise. In particular, the present disclosure is generally related to systems and method for controlling one or more engines to reduce noise in response to a noise sensitive condition.

A noise sensitive condition may include noise limits at locations and time of day along a flight path, and during operations including departure and approach. A noise sensitive condition may also include a noise value approaching or exceeding a selected noise threshold. For example, the noise value may be determined based on a sensor measurement associated with an engine.

In general, a controller is configured to control operating conditions of an engine, geometries of the engine, or both, including a pitch angle of fan blades, a speed of the fan, a pitch angle of outlet guide vanes, a speed of the midfan, and a pitch angle of inlet guide vanes. For example, the controller may control the operating conditions, geometries, of one or both of the engines to reduce noise while maintaining an overall level of thrust of the engine. The operating conditions, geometries, of one or both of the engines may be controlled to adjust a thrust split (e.g., split thrust requirements between unducted streams and ducted streams) in a way that reduces noise and maintains the overall level of thrust.

The systems and methods can independently control thrust splits between the propeller and OGV and/or the mid-fan and the propeller system on port and starboard engines while still maintaining overall thrust on each engine at a nominal level. Independent control allows one or both engines to be controlled, for example, to achieve better noise cancellation within the cabin of an aircraft. For example, a thrust split of one or both engines can be controlled to negate installation asymmetries for the case where the port and starboard engines have the same sense of rotation and achieve equal noise levels from the engines while maintaining the engines at the same level of thrust.

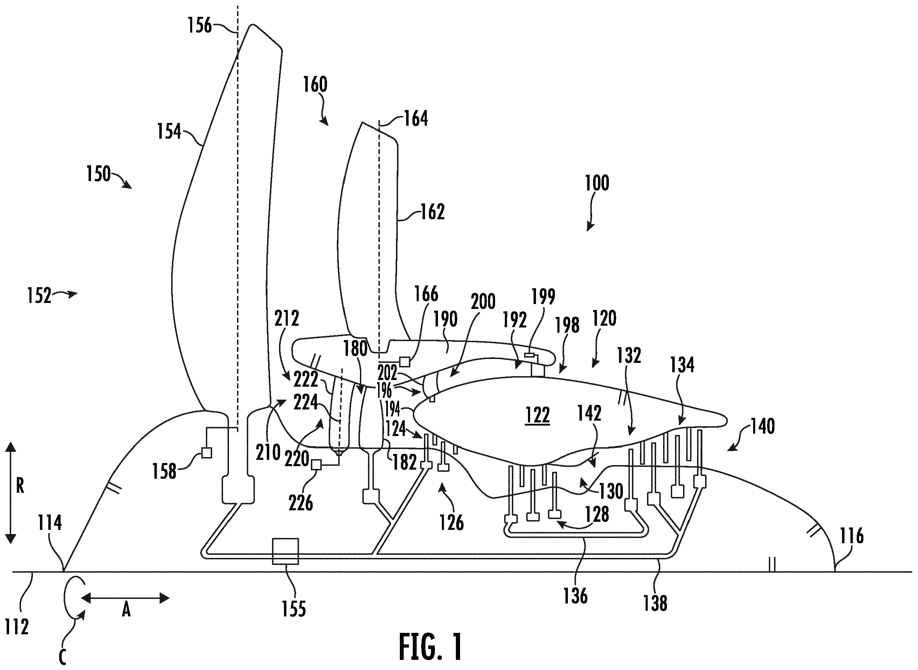

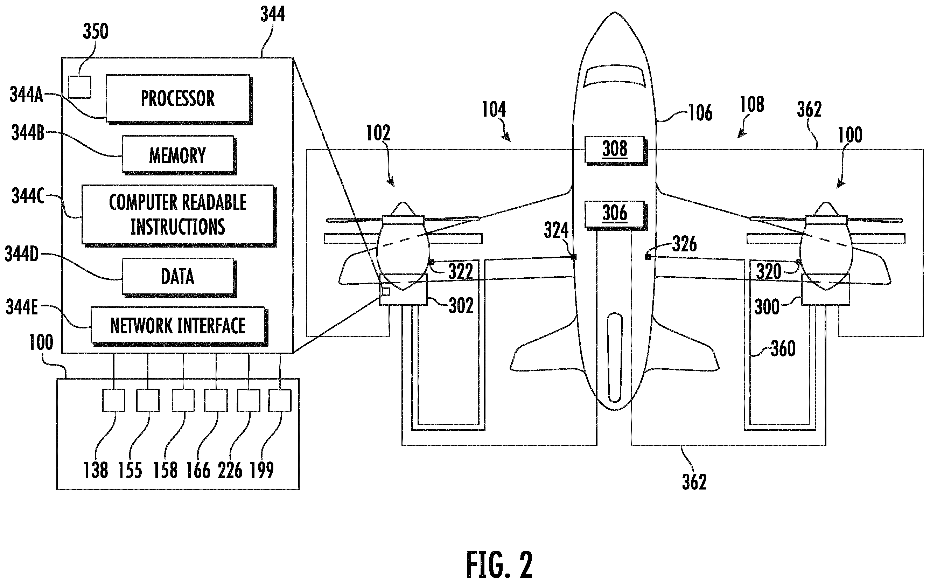

Referring now to the drawings, wherein identical numerals indicate the same elements throughout the figures, Fig. 1 is a schematic illustration of an engine 100 (e.g., a turboprop or turbofan) of an aircraft 104 (see Fig. 2, aircraft 104 has two engines 100, 102; for clarity only engine 100 is described in detail and the description of engine 100 is applicable to engine 102). The aircraft 104 includes a fuselage 106 and a control system 108 (see Fig. 2). The control system 108 is configured to limit noise generated by one or more of the engines 100, 102. For example, engine geometries and operational conditions are controlled to (a) limit community noise during takeoff, and landing operations and (b) limit cabin noise during climb and cruise.

As shown in Fig. 1, the engine 100 has a longitudinal axis 112 or axial centerline that extends therethrough for reference purposes. The engine 100 further defines an upstream end 114 (or forward end) and a downstream end 116 (or aft end) for reference.

In general, an axial direction A extends parallel to the longitudinal axis 112, a radial direction R extends outward from and inward to the longitudinal axis 112 in a direction orthogonal to the axial direction A, and a circumferential direction C extends three hundred sixty degrees (360°) around the longitudinal axis 112.

The engine 100 includes a turbomachine 120. Generally, the turbomachine 120 includes, in serial flow order, a compressor section, a combustion section, a turbine section, and an exhaust section. As shown in Fig. 1, the turbomachine 120 includes a core cowl 122 or core duct that defines an annular core inlet 124.

The core cowl 122 further encloses at least in part a low-pressure system and a high-pressure system. For example, the core cowl 122 depicted encloses and supports at least in part a booster or low pressure ("LP") compressor 126 for pressurizing the air that enters the turbomachine 120 through core inlet 124. A high pressure ("HP"), multi-stage, axial-flow compressor 128 receives pressurized air from the LP compressor 126 and further increases the pressure of the air. The pressurized air stream flows downstream to a combustor 130 of the combustion section where fuel is injected into the pressurized air stream and ignited to raise the temperature and energy level of the pressurized air.

It will be appreciated that as used herein, the terms "high/low speed" and "high/low pressure" are used with respect to the high pressure/high speed system and low pressure/low speed system interchangeably. Further, it will be appreciated that the terms "high" and "low" are used in this same context to distinguish the two systems and are not meant to imply any absolute speed and/or pressure values.

The high energy combustion products flow from the combustor 130 downstream to a high-pressure turbine 132. The high-pressure turbine 132 drives the high-pressure compressor 128 through a high-pressure shaft 136. In this regard, the high-pressure turbine 132 is drivingly coupled with the high-pressure compressor 128.

The high energy combustion products then flow to a low-pressure turbine 134. The low-pressure turbine 134 drives the low-pressure compressor 126 and components of a fan section 150 through a low-pressure shaft 138. In this regard, the low-pressure turbine 134 is drivingly coupled with the low-pressure compressor 126 and components of the fan section 150. The LP shaft 138 is coaxial with the HP shaft 136 in this example embodiment. After driving each of the turbines 132, 134, the combustion products exit the turbomachine 120 through a turbomachine exhaust nozzle 140.

The turbomachine 120 defines a working gas flowpath or core duct 142 that extends between the core inlet 124 and a turbomachine exhaust nozzle 140. The core duct 142 is an annular duct positioned generally inward of the core cowl 122 along the radial direction R. The core duct 142 or working gas flowpath through the turbomachine 120 may be referred to as a second stream.

The engine includes a rotor assembly including the fan section 150. The fan section 150 includes a fan 152, which is the primary fan in this example embodiment. For the depicted embodiment of Fig. 1, the fan 152 is an open rotor or unducted fan 152. As depicted, the fan 152 includes an array of fan blades 154 (only one shown in Fig. 1). The fan blades 154 are rotatable, e.g., about the longitudinal axis 112. As noted above, the fan 152 is drivingly coupled with the low-pressure turbine 134 via the LP shaft 138.

The fan 152 can be directly coupled with the LP shaft 138, e.g., in a direct-drive configuration. However, for the embodiment shown in Fig. 1, the fan 152 is coupled with the LP shaft 138 via a speed reduction gearbox 155, e.g., in an indirect-drive or geared-drive configuration.

Each blade 154 has a root and a tip and a span defined therebetween. Each fan blade 154 defines a central blade axis 156. For this embodiment, each fan blade 154 of the fan 152 is rotatable about their respective central blade axis 156, e.g., in unison with one another. One or more actuators 158 are provided to facilitate such rotation and therefore may be used to change a pitch of the fan blades 154 about their respective central blade axis 156.

The fan section 150 further includes an outlet guide vane array 160 that includes outlet guide vanes (OGV) 162 (only one shown in Fig. 1) or fan guide vanes disposed around the longitudinal axis 112. Each outlet guide vane 162 has a root and a tip and a span defined therebetween.

Each outlet guide vane 162 defines a central blade axis 164. For this embodiment, each outlet guide vane 162 of the outlet guide vane array 160 is rotatable about their respective central blade axis 164, e.g., in unison with one another. In other embodiments, each outlet guide vane 162 of the outlet guide vane array 160 may be rotatable about their central blade axis 164 independently to differing extents. One or more actuators 166 are provided to facilitate such rotation and therefore may be used to change a pitch of the outlet guide vane 162 about their respective central blade axis 164.

The flowpath through the outlet guide vanes 162 may be referred to as a first stream.

In addition to the fan 152, which is unducted, a ducted fan or midfan 180 is included aft of the fan 152, such that the engine 100 includes both a ducted fan and an unducted fan which both serve to generate thrust through the movement of air through at least a portion of the engine 100. The ducted midfan 180 is shown at about the same axial location as the outlet guide vane 162, and radially inward of the outlet guide vane 162.

As depicted, the ducted midfan 180 includes an array of midfan blades 182 (only one shown in Fig. 1). The midfan blades 182 are rotatable, e.g., about the longitudinal axis 112. The ducted midfan 180 is, for the embodiment depicted, driven by the low-pressure turbine 134 (e.g., coupled to the LP shaft 138).

A fan cowl 190 annularly encases at least a portion of the core cowl 122 and is generally positioned outward of at least a portion of the core cowl 122 along the radial direction R. Particularly, a downstream section of the fan cowl 190 extends over a forward portion of the core cowl 122 to define a fan flowpath or fan duct 192. The fan flowpath or fan duct 192 may be referred to as a third stream of the engine 100. The third stream extends from or along a length of the compressor section to provide a rotor assembly flowpath over the turbomachine 120.

Incoming air may enter through the fan duct 192 through a fan duct inlet 196 and may exit through a fan duct nozzle 198 to produce propulsive thrust. The fan duct 192 is an annular duct positioned generally outward of the core duct 142 along the radial direction R. The area of the fan duct nozzle 198 is variable. For example, the fan duct nozzle 198 has a variable area that is controlled by an actuator 199 to change the area of the fan duct nozzle 198. The area of the fan duct nozzle 198 at least partially determines the thrust through the fan duct 192.

The fan duct 192 includes a fan duct guide vane array 200 that includes fan duct guide vanes 202 (only one shown in Fig. 1) disposed around the longitudinal axis 112. Each fan duct guide vane 202 has a root and a tip and a span defined therebetween. The fan duct guide vane array 200 is a guide vane array for the fan duct 192, which again may also be referred to as a third stream. In alternative embodiments, such as a two-stream engine architecture, the fan duct 192 is omitted.

The fan cowl 190 and the core cowl 122 may be connected and supported by a plurality of substantially radially-extending, circumferentially-spaced stationary struts (not shown in Fig. 1). The stationary struts may each be aerodynamically contoured to direct air flowing thereby. Other struts in addition to the stationary struts may be used to connect and support the fan cowl 190 and/or core cowl 122.

The fan duct 192 and the core duct 142 may at least partially co-extend (generally axially) on opposite sides (e.g., opposite radial sides) of the core cowl 122. For example, the fan duct 192 and the core duct 142 may each extend directly from a leading edge 194 of the core cowl 122 and may partially co-extend generally axially on opposite radial sides of the core cowl 122.

The engine 100 also defines or includes an inlet duct 210. The inlet duct 210 extends between an engine inlet 212 and the core inlet 124/fan duct inlet 196. The engine inlet 212 is defined generally at the forward end of the fan cowl 190. The inlet duct 210 is an annular duct that is positioned inward of the fan cowl 190 along the radial direction R.

Air flowing downstream along the inlet duct 210 is split, not necessarily evenly, into the core duct 142 and the fan duct 192 by a splitter or the leading edge 194 of the core cowl 122. The inlet duct 210 is wider than the core duct 142 along the radial direction R. The inlet duct 210 is also wider than the fan duct 192 along the radial direction R.

In exemplary embodiments, air passing through the fan duct 192 may be relatively cooler (e.g., lower temperature) than one or more fluids utilized in the turbomachine 120. In this way, one or more heat exchangers may be disposed within the fan duct 192 and utilized to cool one or more fluids from the core engine with the air passing through the fan duct 192, as a resource for removing heat from a fluid, e.g., compressor bleed air, oil, or fuel. By positioning the fan duct inlet 196 to the fan duct 192 downstream of the midfan 180 (such that an airflow through the fan duct 192 is a pressurized airflow from the midfan 180), an airflow through the fan duct 192 may have a sufficient pressure during operation of the engine 100 such that a pressure drop experienced by the airflow when provided over such one or more heat exchangers in the fan duct 192 may not prevent the airflow from providing a desired amount of thrust for the engine 100 when such airflow exits through the fan duct nozzle 198.

Although not depicted, in certain exemplary embodiments, the engine 100 may further include one or more heat exchangers in other annular ducts or flowpath of the engine 100, such as in the inlet duct 210, in the turbomachinery flowpath or core duct 142, within the turbine section and/or turbomachine exhaust nozzle 140, etc.

The inlet duct 210 includes an inlet guide vane array 220 that includes inlet guide vanes 222 (only one shown in Fig. 1) disposed around the longitudinal axis 112. Each inlet guide vane 222 has a root and a tip and a span defined therebetween. The inlet guide vane array 220 is a guide vane array for the inlet duct 210.

Each inlet guide vane 222 defines a central blade axis 224. For this embodiment, each inlet guide vane 222 of the inlet guide vane array 220 is rotatable about their respective central blade axis 224, e.g., in unison with one another. One or more actuators 226 are provided to facilitate such rotation and therefore may be used to change a pitch of the inlet guide vane 222 about their respective central blade axis 224.

The pitch angle of the inlet guide vanes 222 may be controlled by a controller (see Fig. 2, aircraft 104 has two controllers 300, 302) to control the amount of air through the fan duct 192 and the core duct 142, and the associated propulsive thrust.

It should be appreciated that the exemplary engine 100 depicted in Fig. 1 is by way of example only, and that in other exemplary embodiments, the engine 100 may have any other suitable configuration. For example, aspects of the present disclosure may be utilized with any other suitable aeronautical gas turbine engine, such as a turboshaft engine, turboprop engine, turbojet engine, etc. Further, aspects of the present disclosure may further be utilized with any aeroderivative gas turbine engine, such as a nautical gas turbine engine.

Other gas turbine engines to which the present disclosure may be applied may have alternative configurations. By way of example such engines may have an alternative number of interconnecting shafts (e.g., two) and/or an alternative number of compressors and/or turbines. Further the engine may not include a gearbox provided in the drive train from a turbine to a compressor and/or fan, may be configured as a two-stream gas turbine engine (e.g., excluding the fan duct 192), may not include a midfan 180 etc.

In addition, it will be appreciated that in other exemplary embodiments of the present disclosure, still other engine configurations may be utilized. For example, in other exemplary embodiments of the present disclosure, the midfan 180 may be configured as part of a "fan on blade" configuration, whereby the midfan blades 182 are mounted to, or extend from, an inner compressor blade (e.g., from an inner low-pressure compressor or booster rotor blade).

In fan on blade configurations, a leading edge 194 may extend upstream of the inlet guide vanes and each of the second and third streams (e.g., ducted streams) may include independently adjustable inlet guide vanes. Here, the compressor blades are associated with the second stream and the fan blades mounted to the compressor blades are associated with the third stream.

The pitch of the second stream inlet guide vanes and the pitch of the third stream inlet guide vanes may be controlled by actuators. Accordingly, the pitch of the second stream inlet guide vanes and the pitch of the third stream inlet guide vanes may be adjusted to achieve a thrust split. For purposes of further teaching fan-on-blade configurations and other configurations, U.S. Patent Publication No. 2021/0108597 is hereby incorporated by reference.

Referring to Fig. 2, the control system 108 may include controllers 300, 302, a flight management system 306, manual aircraft controls 308 (e.g., including a selectable quiet mode), and sensors 320, 322.

In one or more exemplary embodiments, the controllers 300, 302 depicted in Fig. 2 may be stand-alone controllers such as a Full Authority Digital Engine Control (FADEC) for providing full digital control of the engine 100. In some alternative embodiments, the engine 100 can include more than one controller for controlling the engine 100, and controllers may be connected with or integrated into one or more of a controller for the engine 100, a controller for the aircraft 104, the control system 108, etc. For example, the controllers 300, 302 may be integrated into or connected to a global supervisory control, as described in further detail below.

The controllers 300, 302 can control various aspects of the engines 100, 102 and may include system-specific or function-specific controls. For example, the controllers 300, 302 may include a noise reduction control, a base power management schedule or control (which may, e.g., dictate engine geometries and conditions based on a desired power or thrust output for the engine 100, including a speed of the fan 152, a pitch angle of the fan blades 154, a pitch angle of the outlet guide vanes 162, a speed of the ducted midfan 180, a pitch angle of the inlet guide vanes 222, etc.), an area of the fan duct nozzle 198, a guide vane schedule (which may, e.g., dictate a pitch angle for the outlet guide vanes 162 and/or the inlet guide vanes 222 based on one or more of an engine operating condition, such as takeoff, climb, cruise, descent, etc.; a fan speed schedule or control; an engine or fan thrust output; or the like), a guide vane control, and a thrust control.

The controller 300 is configured to control geometries of the engine 100, control operating conditions, or otherwise make control decisions based on a noise sensitive condition 350. In particular, the controller 300 may control geometries or operating conditions of unducted features of the engine including a pitch angle of fan blades 154 around their respective central blade axes 156, a speed of the fan 152, and a pitch angle of the outlet guide vanes 162 around their respective central axes 164. The controller 300 may also control geometries or operating conditions of ducted features including a speed of the midfan 180, a pitch angle of inlet guide vanes 222 around their respective central blade axes 224, and an area of the fan duct nozzle 198.

As shown in Fig. 2, the controller 300 may be configured to indirectly or directly control the speed of the LP shaft 138 (e.g., via gearbox 155) and the actuators 158, 166, 199, 226.

Each engine 100, 102 has a respective controller 300, 302. For clarity, only controller 302 is now described in greater detail and the description of controller 302 is applicable to controller 300. Referring particularly to the operation of the controller 302, in at least certain embodiments, the controller 302 can include one or more computing device(s) 344. The computing device(s) 344 can include one or more processor(s) 344A and one or more memory device(s) 344B. The one or more processor(s) 344A can include any suitable processing device, such as a microprocessor, microcontroller, integrated circuit, logic device, and/or other suitable processing device. The one or more memory device(s) 344B can include one or more computer-readable media, including, but not limited to, non-transitory computer-readable media, RAM, ROM, hard drives, flash drives, and/or other memory devices.

The one or more memory device(s) 344B can store information accessible by the one or more processor(s) 344A, including computer-readable instructions 344C that can be executed by the one or more processor(s) 344A. The instructions 344C can be any set of instructions that when executed by the one or more processor(s) 344A, cause the one or more processor(s) 344A to perform operations.

In some embodiments, the instructions 344C can be executed by the one or more processor(s) 344A to cause the one or more processor(s) 344A to perform operations, such as any of the operations and functions for which the controller 300 and/or the computing device(s) 344 are configured, the operations for operating an engine 100 according to a noise sensitivity condition (e.g., methods described below), as described herein, and/or any other operations or functions of the one or more computing device(s) 344. The instructions 344C can be software written in any suitable programming language or can be implemented in hardware. Additionally, and/or alternatively, the instructions 344C can be executed in logically and/or virtually separate threads on processor(s) 344A.

For example, a noise reduction control, a base power management control, a guide vane control, a fan speed control, a variable nozzle area control, and a thrust control may be implemented as control modules including instructions 344C that are executed to provide the control functionality.

The memory device(s) 344B can further store data 344D that can be accessed by the processor(s) 344A. For example, the data 344D can include data indicative of evaluations of noise values or levels based on sensor measurements, data from a flight management system, data indicative of engine/ aircraft operating conditions, and/or any other data and/or information described herein.

The computing device(s) 344 can also include a network interface 344E used to communicate, for example, with the other components (e.g., other of the engine 100, the aircraft 104, the control system 108, etc.) For example, in the embodiment depicted, as noted above, the engine 100 includes one or more sensors for sensing data indicative of one or more parameters of the engine 100, the aircraft 104, or both.

The controller 302 is operably coupled to the one or more sensors 322 (sensors 320 for the controller 300) through, e.g., the network interface, such that the controller 302 may receive data indicative of various operating parameters sensed by the one or more sensors during operation.

The network interface 344E can include any suitable components for interfacing with one or more network(s), including for example, transmitters, receivers, ports, controllers, antennas, and/or other suitable components.

The technology discussed herein refers to computer-based systems, and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

The flight management system 306 may include a navigational database and may use data from sensors 320, 322 such as a global positioning system (GPS), distance measuring equipment (DME), VHF omnidirectional range (VOR), nondirectional beacons (NDBs), and the like to navigate a flight plan. The navigational database may include noise thresholds or noise limits for waypoints of the flight plan.

The manual aircraft controls 308 may include manual controls that are able to set a threshold or select a mode such as quiet mode (e.g., having a predetermined lower noise threshold). For example, the manual aircraft control 308 may be used to lower the noise of the cabin and provide a more comfortable flight.

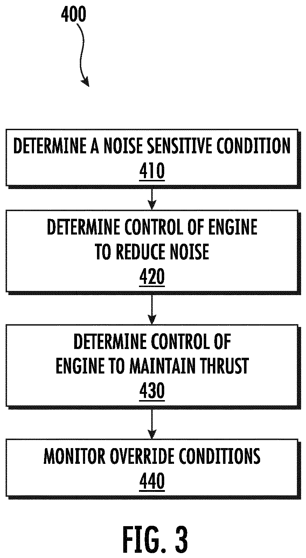

Referring now to Figs. 2 and 3, the controllers 300, 302 and/or the control system 108 are configured to implement an exemplary method 400. For purposes of teaching, the method 400 is described with respect to the controller 300 although the steps may be alternatively implemented by the controller 302 or the control system 108.

According to a first step 410, the controller 300 determines a noise sensitive condition 350. According to a second step 420, the controller 300 determines a control scheme to reduce noise based on the noise sensitive condition. According to a third step 430, the controller 300 determines a control scheme to maintain a nominal thrust based on the control scheme to limit noise. According to a fourth step 440, the controller 300 monitors the engine 100 for override conditions. The method 400 is now described in further detail.

The controller 300 may receive and/or evaluate data to determine the noise sensitive condition 350. For example, the noise sensitive condition 350 may include noise thresholds 362, limits, or target amounts of noise reduction (e.g., amount of noise reduction to achieve a target noise level), an amount of departure from an average or acceptable level of noise, and the like. The noise sensitive condition 350 may be determined or based on other conditions being met, by manual selection or initiation of a mode, combinations thereof, and the like.

The noise thresholds 362, limits, and the like may be looked up in a table of threshold noise levels based other factors or conditions related to the noise sensitive condition such as location, time of day, altitude, etc. For example, the noise sensitive condition 350 may be a function of a location along a flight path, a time of day, an altitude, or a combination thereof. The noise sensitive condition 350 may be specific to noise measurement points encountered during operations including approach, sideline, and cutback.

Here, the noise sensitive condition 350 may be a scheduled or predetermined noise threshold 362 that is triggered or determined based on one or more conditions such as location, time of day, altitude and the like. Such conditions may be detected by a sensor, a flight management system, and the like as described in further detail below. The noise threshold 362 may be implemented for a limited time during which the under-lying conditions hold.

The noise sensitive condition 350 may also be determined or implemented based on a selection of a mode or manual setting. In such cases, a noise threshold 362 may be manually selected or may be automatically determined by analyzing noise values 360 measured over time. For example, engines on opposite sides of an aircraft may operate in a way that creates higher than normal noise levels in the cabin. Here, a noise value 360 may be continuously measured and analyzed, and a feedback control implemented to keep the noise level at (or withing a certain range of) an average or acceptable noise level (which may depend on various conditions). Here, a noise sensitive condition 350 may be implemented in a non-scheduled manner include using control functions to maintain a noise level.

A noise value 360 or noise level may be determined based on one or more measurements or data from sensors 320, 322, 324, 326 associated with the engine 100 or aircraft 104. Sensors may be located on or in the aircraft fuselage (e.g., sensor 324), in the cabin (e.g., sensor 326), may be part of (on or in) the engines 100, 102 (e.g., sensors 320, 322), or at other locations on the aircraft 104.

Exemplary sensors include acoustic sensors, accelerometers or vibration sensors, pressure sensors, temperature sensors (e.g., exhaust gas temperature (EGT) sensors), and the like. Exemplary sensors may also include an altitude sensor, a global positioning system (GPS), a distance sensor, a timer, other sensors discussed below with respect the flight management system 306, and the like.

According to a second step 420 of method 400, the control system 108 determines control of one or more geometries or operating conditions of the engine 100 to reduce noise.

A noise sensitive condition 350 may also include a noise value 360 approaching or exceeding a noise threshold 362 (e.g., a noise threshold set as part of a silent mode). Noise threshold 362 may be set or selected via the manual aircraft control 308 and/or determined from the flight management system 306.

A noise sensitive condition 350 may be determined by the flight management system 306. The noise sensitive condition 350 may be noise thresholds, limits, or target amounts of noise reduction at waypoints along a flight path. The flight management system 306 may provide signals or data indicative of the noise sensitive conditions 350 such that the controllers 300, 302 can implement control schemes for noise reduction at scheduled (or non-scheduled) waypoints along the flight path.

The controller 300 may control the pitch angle of the outlet guide vanes 162 to reduce community noise during takeoff and landing operations. Noise may be measured by ground level sensors at noise measurement points (e.g., acoustic certification points) including at sideline, cutback, and approach. Sideline may be a lateral full-power noise measurement point during takeoff where the noise level is maximum and 1,476 feet to the side of the runway; cutback may be a flyover noise measurement point at a distance of 21,325 feet from a start of roll on the runway; and approach may be a noise measurement point 6,562 feet from the threshold of a runway.

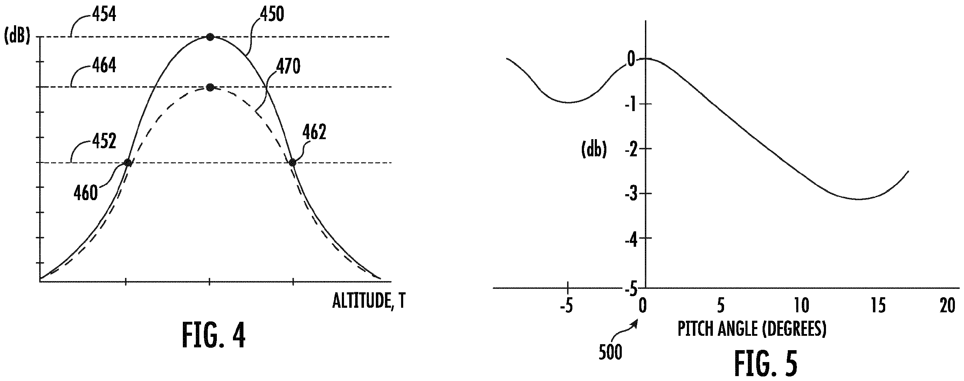

Referring to Fig. 4, an exemplary noise profile 450 (e.g., a Perceived Noise Level with Tone Correction (PNLT) curve) for an aircraft at a sideline noise measurement point is illustrated. Here, the noise profile 450 hits a measurement level 452 (here, -10dB from a nominal peak level 454) on the advancing side at 400 feet of altitude; hits the nominal peak level 454 at approximately 1000 feet of altitude; and hits the measurement level 452 on the retreating side at 1400 feet of altitude for the sideline certification condition. The noise profile 450 may hit the measurement level 452 on the retreating side as high as, for example, 4000 feet at a cutback operating condition. It will be appreciated that the altitudes associated with the noise profile of Fig. 4 are by way of example only.

The noise profile 450 may be measured by a ground level sensor at a noise measurement point beginning at the time (e.g., point 460) when the noise rises above the measurement level 452 on the advancing side and ending at the time (e.g., point 462) when then noise drops below the measurement level 452 on the retreating side. A noise rating may be based on the area between the noise profile 450 and the measurement level 452 between points 460, 462. Other measurement levels 452, 454 may be used and may vary based on regulations at different locations, times of day, combinations thereof, and the like.

To achieve a reduced noise profile 470 for a reduced peak level 464 (e.g., reduced with respect to the nominal noise profile 450 that may be used for measurement levels 452, 454), the controller 300 may determine a noise control scheme described in further detail below including closing the pitch angle of the outlet guide vanes 162 (e.g., with respect to a nominal pitch angle).

The controller 300 may control the pitch angle of the outlet guide vanes 162 to achieve maximum engine efficiency at runway takeoff (e.g., 0 to 400 feet altitude) and then to achieve minimum noise for lateral and flyover acoustic measurement points (e.g., when the aircraft is at 400 feet altitude to 4000 feet altitude Above Ground Level). Accordingly, the closure of the outlet guide vanes 162 may begin at the time, location, and/or altitude when the noise rises above a level -10dB from the reduced peak level 464.

As the location or time along a flight path when the noise rises above a level -10dB from the reduced peak level 464 is associated with an altitude, location, distance, or time (e.g., based on a typical noise profile), control of the pitch angle of the outlet guide vanes 162 by the controller 300 may be based on a command or indication from the flight management system 306 of a noise sensitive condition 350. Additionally or alternatively, a determination may be made from a measurement from the sensor 320, 322 including an above ground altitude sensor (e.g., altitude measured from, e.g., a takeoff point or brake release), a measurement of location (e.g., from a global positioning system (GPS)), a measurement from a distance sensor, a measurement from a timer (e.g., a time after wheels up), combinations thereof, and the like.

Based on the noise sensitive condition 350, the controller 300 may determine a maximum extent to which the pitch angle of the outlet guide vanes 162 may be closed while still maintaining a minimum efficiency for the fan 152, a minimum thrust requirement for the fan 152, or both. For example, input from other sensors 320, 322 (e.g., an exhaust gas temperature (EGT) sensor) may be used to determine the maximum extent to which the outlet guide vanes 162 may be closed from an overall engine performance or turbine lifing standpoint. An EGT sensor may be used to limit the change or closure of outlet guide vanes 162 as turbine life will be affected if the exhaust gas temperature is high.

To maintain overall engine thrust, the speed of the fan 152 may be increased or the pitch of the fan blades 154 may be changed. Alternatively, the pitch of the inlet guide vanes 222 may be adjusted to obtain more thrust through the third stream thereby compensating for any loss of thrust on the primary stream. Since the noise of the engine is heavily influenced by the primary stream, this results in a lower noise operation at the same thrust.

The controller 300 may alternatively or additionally close the outlet guide vanes 162 to an extent that is determined to achieve a noise profile based on a peak noise level. For example, an outlet guide vane 162 closure schedule may be predetermined based on a peak noise level and a measurement from a sensor.

In some cases, the controller 300 may change the pitch angle of the outlet guide vanes 162 to hold a noise level at a level below a peak noise level (e.g., at a level that is -5dB from the nominal peak level 454). In some cases, the controller 300 may continuously or frequently change the pitch angle of the outlet guide vanes 162 to achieve an average noise level below a peak noise level.

According to one aspect of the second step 420 of the method 400, controller 300 changes the pitch angle of the outlet guide vanes 162 around their respective central blade axes 164. Referring to Fig. 5, providing exemplary noise from an unducted (e.g., fan 152 or propellor) component in accordance with one or more aspects of the present disclosure, noise reduction can be achieved by opening or closing the pitch angle of the outlet guide vanes 162 relative to a design point 500. The amount of noise reduction may vary depending on the fan tip speed and design. For example, the method 400 may at step 420 change the pitch angle of the outlet guide vanes 162 relative to the guide vane schedule for the outlet guide vanes 162.

In Fig. 5, negative-value pitch angles correspond to opening the pitch angle of the outlet guide vanes 162 relative to the design point 500 and positive-value pitch angles refer to closing the pitch angle of the outlet guide vanes relative to the design point 500. The pitch angle of the outlet guide vanes 162 is closed to reduce noise under some conditions, for example, such as sideline and cutback. The pitch angle of the outlet guide vanes 162 may be opened to reduce noise under some conditions, for example, such as approach.

The design point 500 may refer to an orientation (including pitch angle) for the component to achieve maximum efficiency from a fuel burn standpoint for a given aircraft mission. The design point 500 may be referred to as an aero design point (ADP).

For example, opening the pitch angle of the outlet guide vanes 162 (e.g., on approach) by about 5 degrees (i.e., -5 degrees on the x-axis) may reduce noise by approximately 1-2 decibels (dB).

Greater noise reduction may be achieved by closing the pitch angle of the outlet guide vanes 162 (e.g., at sideline). For example, closing the pitch angle of the outlet guide vanes 162 by about 5 degrees may reduce noise by approximately 1-2 decibels (dB), closing the pitch angle of the outlet guide vanes 162 by about 10 degrees may reduce noise by approximately 2-4 dB, closing the pitch angle of the outlet guide vanes 162 by about 15 degrees may reduce noise by approximately 3-5 dB.

The noise value may be measured according to various methods including measuring the noise at the blade passing frequency for the fan or the noise at the dominant frequency or the Effective Perceived Noise of the fan system.

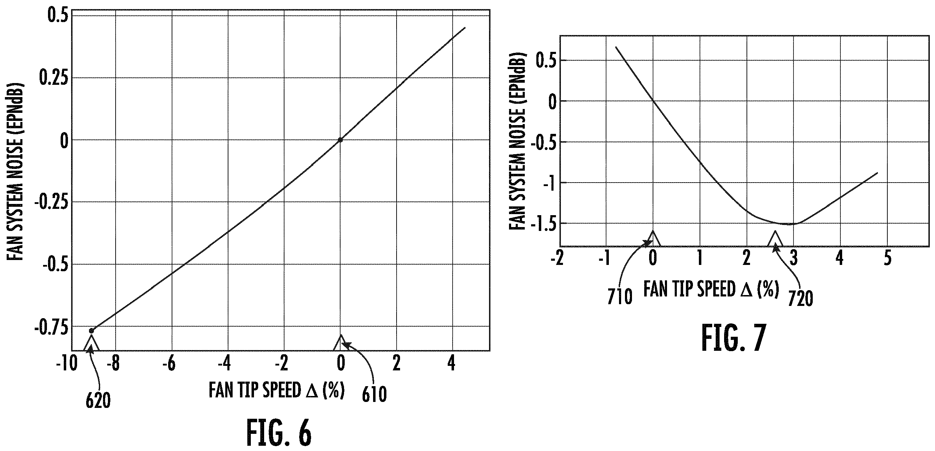

According to another aspect of step 420, referring to Figs. 6 and 7 providing illustrations of fan system noise vs. fan tip speed at approach and sideline, the controller 300 may additionally or alternatively control the speed of the fan 152 (e.g., fan tip speed) with respect to a nominal speed to reduce noise, for example, at one or more of sideline, cutback, and approach. The nominal speed may be one that is optimized for fuel efficiency (e.g., a lowest fuel burn) and/or turbine life considerations. A speed that is alternatively or additionally optimized or selected within an acceptable range of fan tip speeds to reduce noise may be referred to as a noise reduction speed. The total engine thrust may be maintained during operation at a noise reduction speed.

Referring to Fig. 6, on approach and with respect to an approach noise measurement point, the speed of the fan 152 may be reduced with respect to a nominal speed 610 to reduce noise emitted from the fan system. For example, the speed of the fan 152 may be reduced to a noise reduction speed 620 (e.g., a speed that is 8% to 10% below the nominal speed 610) and thereby reduce the fan system noise by 0.6dB to 0.85dB. Here, the mid-fan thrust contribution may be as low as possible.

Referring to Fig. 7, increasing the speed of the fan 152 with respect to a nominal speed 710 (e.g., over speeding) reduces the noise of the fan system at a sideline noise measurement point. Increasing the fan tip speed can in some cases reduce the noise of the fan system as increasing the fan tip speed increases fan efficiency. This in turn reduces the fan wake strength resulting in reduced interaction noise from the outlet guide vanes 162. For example, the speed of the fan 152 may be increased to a noise reduction speed 720 (e.g., a speed that is 2% to 3% above the nominal speed 710) where the fan system noise is at its lowest point on the curve. Here, operating at the noise reduction speed 720 may reduce the noise of the fan system by 1.3dB to 1.5dB relative to operating at the nominal speed 710.

The increased speed may at least partially compensate for a decrease in thrust from closing the pitch angle of the outlet guide vanes 162 and/or the pitch angle of the fan blades 154. Accordingly, together, these measures may cooperate to reduce noise while limiting loss of thrust at sideline (e.g., maintaining an overall thrust for the engine substantially constant).

At cutback and with respect to a cutback measurement point, reducing the fan tip speed with respect to a nominal measurement point, to a certain extent, reduces the fan system noise.

According to another aspect of step 420, the fan blade pitch angle may be changed to increase the thrust produced by the fan 152 to offset any decrease in thrust from closing the pitch angle of the outlet guide vanes 162. While this increases the strength of the wakes shed from fan 152 and therefore increases the interaction noise of these wakes impinging on the outlet guide vanes 162, this change in wake strength is small and the noise of the system with closed pitch angle of the outlet guide vanes 162 is still lower than a nominal setting.

According to a third step 430 of method 400, the controller 300 is configured to control geometries or operating conditions of the engine 100 to maintain the thrust (e.g., a nominal thrust) of the engine based on the geometries and operating conditions determined at the second step 420. The thrust split may be between a unducted stream (e.g., first stream) and ducted streams (e.g., second and third streams). In certain exemplary aspects, the method 400 may at step 430 modify geometries and operating conditions of the engine relative to the base power management schedule in response to steps 410, 420, or both.

The controller 300 may control geometries or operating conditions of ducted features including a speed of the midfan 180 and a pitch angle of inlet guide vanes 222 around their respective central blade axes 224. The controller 300 may control geometries or operating conditions of unducted features of the engine 100 including a pitch angle of fan blades 154 around their respective central blade axes 156, a speed of the fan 152, and a pitch angle of the outlet guide vanes 162 around their respective central blade axes 164. For example, the controller 300 may control unducted features that are not controlled according to the geometries and operating conditions determined at the second step 420.

The amount of thrust needed varies at different altitudes and operations (e.g., departure and landing operations). As one example for the engine configuration of Fig. 1, the contribution to the overall thrust of the engine 100 may be distributed between the fan 152 (and bypass passage) and the fan duct 192.

The geometry or operating condition of one or more of the fan 152, the outlet guide vanes 162, the midfan 180, and the inlet guide vanes 222 may be controlled to maintain a nominal thrust based on a geometry or operating condition of one or more of the fan 152 and the outlet guide vanes 162.

For example, as described above with respect to the second step 420, to reduce noise, the thrust generated by the fan 152 or engine 100 may be reduced as the pitch angle of the outlet guide vanes 162 is closed, the pitch of the fan blade 154 is closed, the speed of the fan 152 is reduced, or a combination thereof.

In some cases, the drop in thrust may be compensated by an increase in the speed of the fan 152 (and the midfan 180). Additionally or alternatively, the controller 300 may maintain the thrust of the engine 100 by changing the pitch angle of the inlet guide vanes 222. Here, additional thrust is provided by the airflow through the fan duct 192 (generated at least in part by the midfan 180 and the inlet guide vanes 222) such that a lower fraction of the thrust is required by the fan 152 and outlet guide vanes 162. The fractional contribution of unducted components or streams and ducted components or streams may be referred to as the thrust split.

Similarly, the thrust generated by the airflow through the fan duct 192 may be reduced as the pitch of the inlet guide vanes 222 is changed, the pitch of the midfan blades 182 is closed (not shown), the speed of the midfan 180 is reduced, or a combination thereof. In some cases, the drop in thrust may be compensated by an increase in the speed of the midfan 180.

Additionally or alternatively, the controller 300 may adjust the thrust split or otherwise add to the thrust of the engine 100 to compensate for the drop in thrust generated by the airflow through the fan duct 192 by increasing the speed of the fan 152, changing the pitch of the fan blades 154, and/or (opening) the pitch angle of the outlet guide vanes 162. Here, additional thrust is provided by the fan 152, such that a lower fraction of the thrust is required by the airflow through the fan duct 192.

According to the fourth step of the method 400, the controller 300 may monitor for conditions where the method 400 should be discontinued or overridden. Such conditions include instances where performance and/or health of the engine is reduced. For example, the controller may monitor engine gas temperature measurements from a sensor 320 of the engine 100 and end the noise reduction method 400 if the temperature reaches a limit.

The noise reduction method 400 may otherwise be overridden by other situations such as if one of the engines is inoperative and the full thrust performance of the functioning engine is needed.

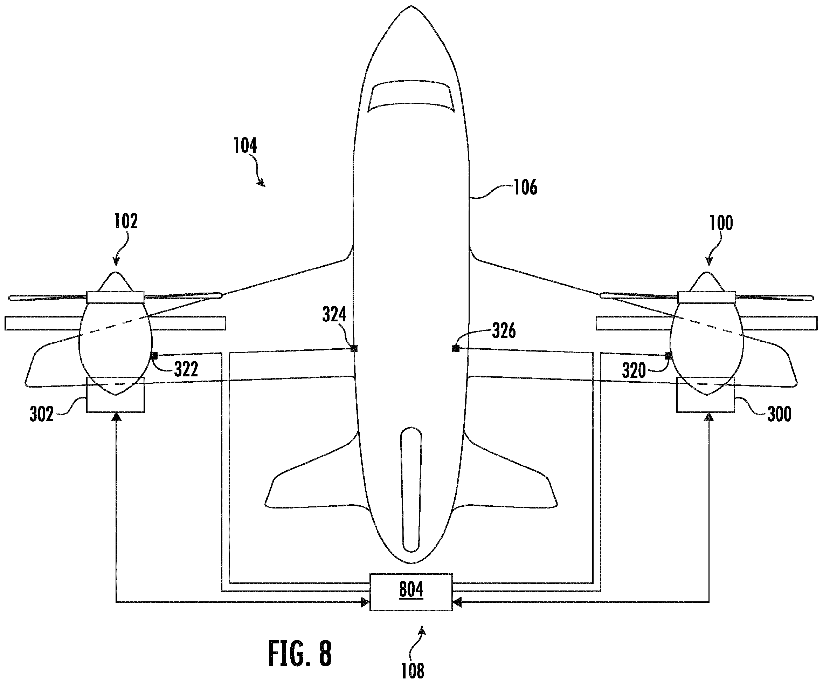

Referring to Fig. 8, providing an alternative embodiment of the control system 108 that may control one or more engines 100, 102 based on a multi-engine noise control method 800. For example, one or more engines may be controlled to limit cabin noise and/or community noise based on noise sensors on or in the aircraft 104. As described above, a noise sensor may include an accelerometer, a temperature sensor, or an acoustic sensor on the interior of the fuselage 106 or cabin (e.g., sensor 326).

In the embodiment of Fig. 8, the control system 108 includes a supervisory controller 804. The supervisory controller 804 is configured to receive sensor measurements from the cabin sensor 326 as well as engine sensors 320, 322 and to coordinate control of the engines 100, 102 via the controllers 300, 302 to reduce the overall noise. Alternatively or additionally, the controllers 300, 302 may directly communicate with one another to share data (e.g., sensor data, geometry, speed, etc.) and coordinate control of the engines 100, 102 to reduce overall noise.

A starboard acoustic noise sensor 320 may be positioned proximate a starboard-side engine 100 (e.g., as described with respect to engine 100) and a port-side acoustic noise sensor 322 may be positioned proximate a port-side engine 102 (e.g., as described with respect to engine 100).

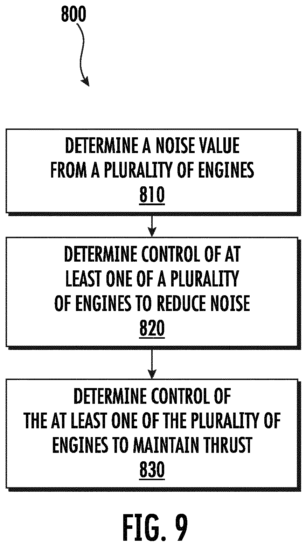

Referring to Fig. 9, according to a first step 810, the supervisory controller 804 determines a noise sensitive condition 350 (e.g., a noise value 360 from engine sensors 320, 322) associated with each of engines 100, 102 (e.g., port-side and starboard). Alternatively or additionally, the supervisory controller 804 may also determine a noise value 360 of the cabin from the cabin sensor 326 that is approaching or exceeding a noise threshold.

The starboard-side engine 100 may have a different noise level (e.g., based on the direction of rotation of the fan 152 or other factors) than the port-side engine 102. Accordingly, the associated acoustic noise sensors 320, 322 may measure different noise levels.

According to a second step 820, the supervisory controller 804 determines control of at least one of the engines 100 to reduce noise. The supervisory controller 804 may determine a contribution (e.g., to a cabin noise value 360 from cabin sensor 326) and control the engine geometries or operational conditions of one engine 100 differently than the engine geometries or operational conditions of the other engine 102 (e.g., according to different contributions) to reduce the overall cabin noise.

For example, the supervisory controller 804 may independently adjust the engine geometries or speeds of the port and/or starboard engines 100, 102 to reduce a noise level of an engine 100, 102 associated with a higher noise. Alternatively or additionally, the supervisory controller 804 may independently adjust the engine geometries or speeds of the port and/or starboard engines 100, 102 to enable better noise cancellation within the cabin or fuselage 106.

According to a third step 830, the supervisory controller 804 determines control of the engines 100, 102 to maintain a nominal thrust for each based on the geometries and/or speeds determined from second step 820. The supervisory controller 804 may independently adjust the thrust splits of the engines 100, 102 while maintaining the same overall thrust of the engines 100, 102. The thrust adjustments may be a function of an aircraft operating condition (e.g., cruise, climb etc.).

This written description uses examples to disclose the present disclosure, including the best mode, and to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:
An engine comprising an unducted fan drivingly coupled with a low-pressure turbine, the unducted fan comprising a plurality of fan blades, wherein a pitch angle of the fan blades is variable; a plurality of unducted outlet guide vanes, wherein a pitch angle of the unducted outlet guide vanes is variable; and a controller configured to change, based on a noise sensitive condition, at least one of: the pitch angle of the unducted outlet guide vanes; a speed of the unducted fan; and the pitch angle of the fan blades.

The engine of one or more of these clauses, wherein changing the pitch angle of the unducted outlet guide vanes based on the noise sensitive condition comprises closing the unducted outlet guide vanes by 3 to 20 degrees relative to a design point.

The engine of one or more of these clauses, wherein changing the pitch angle of the unducted outlet guide vanes based on the noise sensitive condition comprises opening the unducted outlet guide vanes by 1 to 5 degrees relative to a design point.

The engine of one or more of these clauses, wherein the speed of the unducted fan is increased.

The engine of one or more of these clauses, wherein the speed of the unducted fan is decreased.

The engine of one or more of these clauses, wherein the controller is configured to change: a pitch of the unducted outlet guide vanes relative to a nominal pitch; a pitch of the fan blades relative to a nominal pitch; and a speed of the unducted fan relative to a nominal speed.

The engine of one or more of these clauses, wherein the noise sensitive condition is based on at least one of a location, an altitude, and a time of day.

The engine of one or more of these clauses, wherein the noise sensitive condition is based on a noise measurement point of at least one of approach, cutback, and sideline.

The engine of one or more of these clauses, wherein the noise sensitive condition is based on a selected noise threshold.

The engine of one or more of these clauses, wherein the noise sensitive condition is based on maintaining noise value at a noise level.

The engine of one or more of these clauses, wherein the controller is further configured to adjust a thrust split between an unducted airflow stream and a ducted airflow stream.

The engine of one or more of these clauses, wherein adjusting the thrust split between the unducted airflow stream and the ducted airflow stream includes maintaining a nominal thrust of the engine.

The engine of one or more of these clauses, comprising a ducted fan and inlet guide vanes forward of the ducted fan, wherein a pitch angle of the inlet guide vanes is variable.

The engine of one or more of these clauses, wherein the controller is configured to control the pitch angle of the inlet guide vanes to adjust a thrust split between an unducted airflow stream and a ducted airflow stream based on the noise sensitive condition.

The engine of one or more of these clauses, further comprising a variable area fan duct nozzle.

The engine of one or more of these clauses, wherein the controller is configured to control the area of the variable area fan duct nozzle to adjust a thrust split between an unducted airflow stream and a ducted airflow stream based on the noise sensitive condition.

An aircraft, comprising: a first engine comprising a first unducted fan, a first ducted fan, and first outlet guide vanes; a second engine comprising a second unducted fan, a second ducted fan, and second outlet guide vanes; and a controller configured to independently adjust, based on a first noise value associated with the first engine and a second noise value associated with the second engine, at least one of: a first thrust split between the first unducted fan and at least one of the first ducted fan and the first outlet guide vanes; and a second thrust split between the second unducted fan and at least one of the second ducted fan and the second outlet guide vanes.

The aircraft of one or more of these clauses, wherein the first noise value is based on a measurement from a first sensor associated with the first engine, and the second noise value is based on a measurement from a second sensor associated with the second engine.

The aircraft of one or more of these clauses, wherein the first sensor is on one of the first engine and a fuselage of the aircraft; and the second sensor is on one of the second engine and the fuselage of the aircraft.

A method of operating a gas turbine engine, the gas turbine engine comprising a low-pressure turbine, an unducted fan drivingly coupled with the low-pressure turbine, and a plurality of outlet guide vanes, the method comprising: receiving data indicative of a noise sensitive condition with a controller of the gas turbine engine; and changing, in response to the received data indicative of the noise sensitive condition, at least one of: a pitch angle of the outlet guide vanes; a speed of the unducted fan; and a pitch angle of fan blades of the unducted fan.

## Claims

1. An engine (100, 102), comprising:
an unducted fan (152) drivingly coupled with a low-pressure turbine (134), the unducted fan (152) comprising a plurality of fan blades (154), wherein a pitch angle of the fan blades (154) is variable;
a plurality of unducted outlet guide vanes (162), wherein a pitch angle of the unducted outlet guide vanes (162) is variable; and
a controller (300, 302) configured to change, based on a noise sensitive condition (350), at least one of:
the pitch angle of the unducted outlet guide vanes (162);
a speed of the unducted fan (152); and
the pitch angle of the fan blades (154).

2. The engine (100, 102) of claim 1, wherein changing the pitch angle of the unducted outlet guide vanes (162) based on the noise sensitive condition (350) comprises closing the unducted outlet guide vanes (162) by 3 to 20 degrees relative to a design point.

3. The engine (100, 102) of any preceding claim, wherein changing the pitch angle of the unducted outlet guide vanes (162) based on the noise sensitive condition (350) comprises opening the unducted outlet guide vanes (162) by 1 to 5 degrees relative to a design point.

4. The engine (100, 102) of any preceding claim, wherein the speed of the unducted fan (152) is increased.

5. The engine (100, 102) of any preceding claim, wherein the speed of the unducted fan (152) is decreased.

6. The engine (100, 102) of any preceding claim, wherein the controller (300, 302) is configured to change:
a pitch of the unducted outlet guide vanes (162) relative to a nominal pitch;
a pitch of the fan blades (154) relative to a nominal pitch; and
a speed of the unducted fan (152) relative to a nominal speed.

7. The engine (100, 102) of any preceding claim, wherein the noise sensitive condition (350) is based on at least one of a location, an altitude, and a time of day.

8. The engine (100, 102) of any preceding claim, wherein the noise sensitive condition (350) is based on a noise measurement point of at least one of approach, cutback, and sideline.

9. The engine (100, 102) of any preceding claim, wherein the noise sensitive condition (350) is based on a selected noise threshold.

10. The engine (100, 102) of any preceding claim, wherein the noise sensitive condition (350) is based on maintaining noise value at a noise level.

11. The engine (100, 102) of any preceding claim, wherein the controller (300, 302) is further configured to adjust a thrust split between an unducted airflow stream and a ducted airflow stream.

12. The engine (100, 102) of claim 11, wherein adjusting the thrust split between the unducted airflow stream and the ducted airflow stream includes maintaining a nominal thrust of the engine (100, 102).

13. The engine (100, 102) of any preceding claim, comprising a ducted fan (180) and inlet guide vanes (222) forward of the ducted fan (180), wherein a pitch angle of the inlet guide vanes (222) is variable.

14. The engine (100, 102) of claim 13, wherein the controller (300, 302) is configured to control the pitch angle of the inlet guide vanes (222) to adjust a thrust split between an unducted airflow stream and a ducted airflow stream based on the noise sensitive condition (350).

15. The engine (100, 102) of claim 13 or 14, further comprising a variable area fan duct nozzle (198), wherein the controller is configured to control the area of the variable area fan duct nozzle (198) to adjust a thrust split between an unducted airflow stream and a ducted airflow stream based on the noise sensitive condition (350).
